# EUROPÄISCHE PATENTSCHRIFT

(11) **EP 1 123 234 B1**
(45) Veröffentlichungstag und Bekanntmachung des Hinweises auf die Patenterteilung: **26.09.2007**
(21) Anmeldenummer: 99953917.4
(22) Anmeldetag: 22.10.1999
(51) Int. Cl.: B60T 13/66, B61F 5/10, B61F 5/50

(54) **BREMSSYSTEM FÜR EIN SCHIENENFAHRZEUG**
BRAKE SYSTEM FOR RAILWAY VEHICLES
SYSTEME DE FREINAGE POUR VEHICULE SUR RAILS

(30) Priorität: 23.10.1998 DE 19848990; 23.10.1998 DE 19848992; 23.10.1998 DE 19848994; 23.10.1998 DE 19848995
(43) Veröffentlichungstag der Anmeldung: 16.08.2001
(73) Patentinhaber: KNORR-BREMSE Systeme für Schienenfahrzeuge GmbH, 80809 München (DE)
(72) Erfinder: AURICH, Stefan, D-86316 Friedberg (DE); KLEEMANN, Ulrich, D-81247 München (DE); WALDMANN, Peter, D-80995 München (DE); FIRSCHING, Peter, D-80999 München (DE); VOHLA, Manfred, D-80995 München (DE)
(86) Internationale Anmeldenummer: PCT/EP1999/008015
(87) Internationale Veröffentlichungsnummer: WO 2000/024625

(56) Entgegenhaltungen:
- EP-A1- 0 526 871
- EP-A1- 0 930 211
- EP-A2- 0 363 827
- EP-A2- 0 855 319
- EP-A2- 0 873 927
- DE-A1- 4 022 671
- DE-A1- 4 339 570
- DE-A1- 19 634 567
- DE-A1- 19 819 094
- US-A- 4 316 640
- US-A- 4 753 174
- US-A- 5 638 276
- US-A- 5 681 015

## Beschreibung

Die vorliegende Erfindung betrifft ein Bremssystem für ein Schienenfahrzeug nach dem Oberbegriff des Anspruchs 1. Ein solches Bremssystem ist in der EP 0 855 319 A2 sowie der nachveröffentlichten EP 0 958 980 A2 beschrieben.

Moderne Bremssysteme für Schienenfahrzeuge umfassen sowohl pneumatisch und/oder hydraulisch als auch elektronisch zu steuernde Komponenten. Im Vollbahnbereich kommen zumeist pneumatische Systeme zum Einsatz, mittels denen sowohl die Bremseinrichtungen des Schienenfahrzeugs als auch weitere Hilfsaggregate wie Federspeicherbremsen, Spurkranzschmierung, Putzklotz, Sandungseinrichtung etc. angesteuert werden. Hierzu weist das Schienenfahrzeug eine Drucklufterzeugungseinrichtung auf, welche in der Regel direkt eine Hauptluftbehälterleitung sowie ferner über ein Zugbremsventil eine Hauptluftleitung speist. Die Bremseinrichtung des Zugfahrzeugs und die Hilfsaggregate werden dabei durch die Hauptluftbehälterleitung mit Druckluft versorgt. Dazu werden auch Hilfsaggregate des Zugverbandes, wie zum Beispiel Türöffnungseinrichtungen durch die Hauptluftbehälterleitung angesteuert. Die über das Zugbremsventil gespeiste Hauptluftleitung dient zum Ansteuern der einzelnen Wagenbremsen eines Zugverbandes und kann auch als zusätzliche weitere Ansteuerung für die Bremsensysteme des Zugfahrzeugs genutzt werden.

Ein derartiger Aufbau erfordert jedoch umfassende pneumatische Installationen im Zugverband und insbesondere zwischen den Führerständen und den Drehgestellen des Zugfahrzeugs. Dadurch ist die Konstruktionsfreiheit bei der Ausgestaltung derartiger Schienenfahrzeuge begrenzt, da ein erheblicher Raumbedarf erforderlich ist. Von weiterem Nachteil sind das Gewicht dieser Installationen und der insbesondere für die Montage erforderliche Aufwand. Eine derartige pneumatische Steuerungseinheit ist z.B. aus der EP 0 855 319 A2 bekannt.

Aus der DE-AS 21 05 564 und der DE 28 01 778 A1 der selben Anmelderin sind beispielsweise elektro-pneumatische Bremsen für Schienenfahrzeuge bekannt. In den Dokumenten US 5,503,469 und US 5,538,331 sind ferner elektro-pneumatische Bremssysteme beschrieben, bei denen Zentralrechner als Steuereinheit zum Einsatz kommen, um das System zu vereinfachen und Komponenten wie z.B. Mikroschalter einzusparen. Ferner erlaubt der Zentralrechner eine Verknüpfung unterschiedlicher elektro-pneumatischer Fahrzeugsysteme mittels einer entsprechenden Programmierung. Aus der DE 28 40 262 C2 ist es schließlich bekannt, aktuelle Betriebsdaten in einem Zentralrechner zu verarbeiten und bei der Ansteuerung der Bremseinrichtungen zu berücksichtigen.

Die DE 38 33 922 A1 wie auch die EP 0 363 827 A2 der selben Anmelderin offenbaren ein Bremssystem für schienengebundene Drehgestellfahrzeuge, das in jedem der Drehgestelle eine hydraulische Durckversorgungseinheit aufweist. Bei Bremssystemen gemäß der US 4 753 174 und der EP 0 526 871 ist der Druckbehälter im Drehgestell integriert.

Aus der DE 40 22 671 A1 ist ein elektronisches Bremssystem für Straßenfahrzeuge bekannt, dessen Elektronik dezentral ausgebildet ist, mit einem Zentralmodul und mehreren Radmodulen. Weiterhin ist in der DE 43 39 570 A1 ein elektronisches Bremssystem für Kraftfahrzeuge bzw. Straßenfahrzeuge beschrieben, das ein Zentralmodul und den Bremskreisen oder Radgruppen bzw. Rädern zugeordnete Bremsmodule aufweist, die vom Zentralmodul vorgegebene Bremsdrucksollwerte erhalten. Das Bremspedal ist mit einem Hauptbremszylinder verbunden. Das Zentralmodul soll ABS-ASR-Berechnungen durchführen und ist für die Bremskraftverteilung auf die Räder des Straßenfahrzeugs zuständig. Ferner beschreibt die DE 196 34 567 A1 ein elektronisches Bremssystem für Kraftfahrzeuge.

Die DE 26 11 924 C2 beschreibt ein Wiegendrehgestell für schnellfahrende Schienenfahrzeuge, bei dem die Achsen über die Achslagergehäuse mittels einer Primärfeder an dem etwa H-förmigen Drehgestellrahmen abgestützt und mittels Federblattlenkern an demselben angelenkt sind. Die Wiege liegt über Luftfedern auf den Federtrögen auf Die Luftfedern werden aus auf in der Wiege angeordneten Zusatzluftbehältern mit Druckluft beaufschlagt. Weiterhin beschreibt die WO 93/01076 ein Drehgestell für schnellauffähige Schienenfahrzeuge mit einem am Wiegenträger befestigten Zusatzluftbehälter.

Ferner offenbart die DE 43 22 716 A1 einen Rahmen für Nutzfahrzeuge, der aus einem Vorderachsteilrahmen, einem mittleren Teilrahmen und einem Hinterachsteilrahmen aufgebaut ist. Der Vorderachs- und der Hinterachsteilrahmen bestehen aus mit Querträgern verbundenen Längsträgersegmenten. Der mittlere, zweite Teilrahmen übernimmt die Funktion der eigentlichen Längsträger und verbindet den ersten Teilrahmen mit dem dritten Teilrahmen. Dabei können geschlossene Strukturteile der Längsträgersegmente des mittleren Teilrahmens als Betriebsmittelspeicher ausgebildet sein. Ferner offenbart die DE 39 40 250 A1 in einem Kraftfahrzeug bzw. in einem Personenkraftwagen in Trägerprofilen angeordnete Druckmittelbehälter.

Eine Einrichtung zur Erfassung und Überwachung der Bremswirkung eines schienengebundenen Triebfahrzeuges bei einer Notbremsung wird in der DE 195 10 755 A1 vorgeschlagen. Um bei einer Bremseinrichtung für einen Zugverband, der aus mehreren Zugeinheiten mit je mindestens einem Triebfahrzeug und mehreren dazugehörigen Zugfahrzeugen besteht, einen verzögerungsfreien Bremsvorgang zu erreichen und einen unnötigen Betrieb der Regelventile im Zugverband zu vermeiden, wird in der DE 197 39 444 A1 vorgeschlagen, daß zur synchronen Druckmittelbeaufschlagung der Druckleitung durch die Regelventile der Zugbus in bidirektionaler Kommunikation mit einem Befehlsgerät steht, wobei der Zugbus zur synchronen Betätigung der Bremsen die Bremsventile im Zugverband ansteuert.

Die EP 0 855 319 A2 beschreibt ein Bremssystem für ein Schienenfahrzeug mit einer Hauptluftbehälterleitung, die von einer Drucklufterzeugungseinrichtung gespeist wird, wobei jedem Drehgestell wenigstens eine Druckluftleitung zugeführt ist, welche über ein Rückschlagventil und einen Druckluftbehälter mit der Hauptluftbehälterleitung verbunden ist, und welche die Betriebsbremsventile zur Beaufschlagung von Bremsen des Drehgestells oder eine Steuereinheit für die Federspeicherbremse und/oder weitere Steuereinheiten für weitere Hilfsaggregate speist.

In der deutschen Patentanmeldung DE 195 13 004 A1 wird zur Vereinfachung des Systems eine Zusammenfassung der elektronischen und pneumatischen oder hydraulischen Steuer- und/oder Überwachungselemente des Bremssystems in einer Einheit im Führerstand vorgeschlagen. Diese Bauweise hat den Vorteil, daß sich der Installationsaufwand wenigstens im Fahrzeugaufbau verringert. Allerdings ist auch bei dieser Bauform eine umfassende Verrohrung zwischen dem Führerstand und den Drehgestellen des Schienenfahrzeugs erforderlich, um die pneumatische Ansteuerung der Brems- und Hilfsaggregate zu ermöglichen.

Ferner müssen derartige Bremssysteme für ein Schienenfahrzeug über Notbremseinrichtungen verfügen, durch welche das Schienenfahrzeug im Störfall zuverlässig zum Halten gebracht werden kann. Hierzu weisen herkömmliche Bremssysteme pneumatische Einrichtungen auf, welche zum Beispiel beim Betätigen einer Notbremse die Bremsen des Fahrzeugs zum Einsatz bringen. Dies geschieht beispielsweise durch rein pneumatische Betätigungsleitungen oder durch elektrische Signalleitungen, welche Notbremsventile ansteuern, die nach dem Ruhestromprinzip arbeiten.

Dieses System, welches sich in der Praxis durchaus bewährt hat, weist jedoch den Nachteil auf, daß für die Realisierung ein erheblicher Aufwand notwendig ist. Fahrzeuge, die mit einer elektrischen Notbrems-Signalleitung ausgerüstet sind, müssen mit rein mechanisch-pneumatischen Elementen zur Anpassung der Bremskraft an die Gegebenheiten, z.B. den Beladungszustand, ausgerüstet werden. Dazu ist neben aufwendigen, pneumatischen Komponenten auch eine umfangreiche Rohrverlegung erforderlich.

Weiter sind entsprechende, auf das Pneumatiksystem einwirkende Vorrichtungen in erheblicher Anzahl erforderlich, damit auch ein Fahrgast ein Notbremssignal einleiten kann. Auch wenn an anderer Stelle im Druckluftsystem eine Störung auftritt, muß eine Notbremsung automatisch eingleitet werden.

Das bekannte Notfall-System erfordert einen umfassenden Installationsaufwand. Dies wirkt sich nachteilig hinsichtlich der Material- und Montagekosten aus. Von weiterem Nachteil ist, daß dieses System relativ schwer ist, was sich nachteilig auf den Energieverbrauch beim Betrieb des Schienenfahrzeugs auswirkt.

Der Erfindung liegt die Aufgabe zugrunde, ein Bremssystem für ein Schienenfahrzeug bereitzustellen, welches sich durch einen vereinfachten und kostengünstigeren Aufbau auszeichnet.

Diese Aufgabe wird durch die Weiterbildung eines gattungsgemäßen Bremssystems für ein Schienenfahrzeug mit den Merkmalen des Anspruches 1 gelöst.

Durch die bauliche Dezentralisierung des Bremssystems sind das Rückschlagventil und der Druckluftbehälter dort angeordnet, wo sie ihre Wirkung entfalten.

Wenn im oder am Drehgestell ein Rückschlagventil einer Druckluftleitung angeordnet ist, welches zur Zufuhr von Druckluft aus der Hauptluftbehälterleitung zu Betriebsbremsventilen zur Beaufschlagung von Bremsen des Drehgestells bzw. zum Speisen der Steuereinheit für die Federspeicherbremse und/oder weiterer Steuereinheiten für weitere Hilfsaggregate vorgesehen ist, kann ein Drehgestellmodul bereitgestellt werden, welches bereits wesentliche zur Steuerung eines Bremssystems erforderliche Einrichtungen integral aufweist. Ein derartiges Drehgestell kann so vorteilhafter Weise wesentlich zur Verringerung des Montageaufwands für ein Schienenfahrzeug beitragen.

In besonders vorteilhafter Weise läßt sich somit der Installationsaufwand zwischen dem Führerstand und einem Drehgestell verringern. Hierbei können durch die wenigstens eine Druckluftleitung neben der Betriebsbremse auch Hilfsaggregate betrieben werden. Dadurch vereinfacht sich das System wesentlich und der Material- und Montageaufwand ist geringer als bei bekannten Bauweisen. Zudem läßt sich damit auch das Gewicht der gesamten Anordnung reduzieren.

Dadurch, daß der Rahmen oder andere konstruktive Elemente des Drehgestells zumindest abschnittsweise als Druckluftbehälter ausgebildet sind, kann der Platzbedarf in diesem Bereich weiter verringert werden. Dabei wird die Rahmenstruktur des zumeist als Schweißkonstruktion ausgebildeten Drehgestells in besonders günstiger Weise ausgenutzt. Im Rahmen des Drehgestells vorliegende Hohlräume werden so neben ihrer statischen auch einer zusätzlichen Nutzung zugeführt. Hierdurch verringert sich auch der konstruktive Aufwand, da kein zusätzlicher Druckluftbehälter in diesem Bereich angeordnet werden muß. Die zur Aufnahme der Druckluft erforderliche Dichtigkeit im Rahmen kann dabei mit herkömmlichen Mitteln durch Dichtschweißen etc. hergestellt werden. Dieses erfindungsgemäße Drehgestell zeichnet sich durch eine funktionelle Mehrfachnutzung aus. So dient es in üblicher Weise weiter zur Lagerung der Achsen und Aufnahme der durch den Wagenkasten aufgebrachten Last. Zusätzlich dient es auch als Hohlkörper, in dem Druckluft gespeichert werden kann. Das erfindungsgemäße Drehgestell stellt daher ein besonders vorteilhaftes Modul zur Vereinfachung eines Schienenfahrzeugs dar. Damit sind wesentliche konstruktive, montagetechnische und finanzielle Vorteile erzielbar.

In besonders vorteilhafter Weise erlaubt eine Dezentralisierung der elektronischen Bremssteuereinheit mittels der lokalen elektronischen Bremssteuereinheiten in den Drehgestellen auch eine Verlagerung der notwendigen pneumatischen Einrichtungen in die Drehgestelle, wodurch sich der Aufwand für die Verrohrung wesentlich verringert. Die Aufgabe des pneumatischen Systems beschränkt sich somit erfindungsgemäß auf die Einleitung der gewünschten Funktionen vor Ort, daß heißt im Drehgestell, während die Ansteuerung dieser Funktionen über das elektronische System erfolgen kann. Für die hierfür nötige elektrische Verdrahtung ist ein wesentlich geringerer Aufwand erforderlich, als für die pneumatische Ansteuerung im Stand der Technik. Insbesondere kann so der Raumbedarf für die Steuereinrichtungen und auch das Gewicht wesentlich reduziert werden. Ferner verringert sich auch der Montageaufwand erheblich. Der konstruktive Aufwand für das Gesamtsystem verringert sich dadurch weiter, wobei ein modularer Aufbau der dezentralen Steuereinrichtungen mit Vorabmontage in den Drehgestellen erzielbar ist.

Von weiterem Vorteil ist, daß sich damit auch die Zuverlässigkeit des Systems erhöht. Fällt beim erfindungsgemäßen Bremssystem eine einzelne lokale Bremssteuereinheit von mehreren aus, so beeinträchtigt dies die Funktionsfähigkeit des Gesamtbremssystems eines Zugverbandes noch nicht entscheidend.

Dadurch, daß der lokalen Bremssteuereinheit Signale der vom Lokführer bedienbaren Vorgabeeinrichtung und Signale von lokalen Einrichtungen zur Erfassung von aktuellen Betriebsgrößen - wie Schlupf, Achslast, Raddrehzahl, Ist-Verzögerung und Drehgestellast - und/oder Signale von Einrichtungen zur Überwachung und automatischen Betriebsführung (ATO, ATC, ATP) eingangsseitig vorliegen, können diese bei dem jeweiligen Bremsvorgang in vorteilhafter Weise berücksichtigt werden. Das Bremsverhalten des Schienenfahrzeuges und des Zugverbandes kann so noch exakter gesteuert werden. Insbesondere können hierdurch aktuelle Betriebsdaten zwischen den einzelnen dezentralen Modulen ausgetauscht werden, wodurch sich die Stabilität des Zugverbandes im Bremsfalle weiter erhöht. Das Bremsverhalten des Schienenfahrzeugs kann somit auch bei unterschiedlichsten Schienenfahrzeugen und Umgebungsbedingungen vergleichbar gehalten werden, was den Komfort zum Beispiel in Personenzügen wesentlich erhöht.

Wenn die Bremssignale über einen zentralen Schienenfahrzeug-Datenbus zu wenigstens einem als geeignete Schnittstelle ausgebildeten Gateway geleitet werden, von wo aus diese bzw. korrespondierende Bremssignale über einen zentralen Bremsdatenbus an die lokalen Bremssteuereinheiten weitergeleitet werden, können auch Schienenfahrzeuge unterschiedlicher Bauart mit unterschiedlicher Fahrzeug-Leittechnik miteinander kombiniert werden und gemeinsam das erfindungsgemäße Bremssystem nutzen. Der als Schnittstelle ausgebildete Gateway erlaubt dabei eine Anpassung des Datenformats an den jeweiligen Schienenfahrzeugtyp bzw. dessen Steuerlogik.

Wenn dagegen nur Schienenfahrzeuge mit einer Leittechnik gleicher Bauweise miteinander verbunden werden, können die Bremssignale vorteilhafterweise alternativ direkt vom zentralen Schienenfahrzeug-Datenbus zu den lokalen Bremssteuereinheiten weitergeleitet werden. Dadurch verringert sich der bauliche Aufwand für das Bremssystem weiter.

Von weiterem Vorteil ist es, wenn die lokale Bremssteuereinheit achsweise und/oder drehgestellweise im Drehgestell oder am Wagenkasten im Bereich des Drehgestells plaziert ist. Dann läßt sich dieses Modul vorab montieren, wodurch sich die Montage des Gesamtsystem vereinfacht. Weiter wird damit erreicht, daß die lokale Bremssteuereinheit in der Nähe des Bereiches angeordnet ist, wo sie ihre Wirkung entfalteten soll. Dadurch verringert sich der Aufwand für die Steuerungslogistik und insbesondere sind nur kurze Leitungswege erforderlich.

Wenn die lokale Einrichtung zur Erfassung von aktuellen Betriebsgrößen radweise und/oder achsweise und/oder im Drehgestell angeordnet ist, können auch hier diese Daten vor Ort erfaßt und auf kurzem Wege in die lokale Bremssteuereinheit geleitet werden. Lange Verbindungsleitungen mit der damit verbundenen Gefahr von Beschädigungen derselben können so vermieden werden und die Daten lassen sich direkt nutzen.

Von weiterem Vorteil ist es, wenn die jeweilige lokale Bremssteuereinheit über Daten verfügt, mittels der eine Verknüpfung von Signalen der Vorgabeeinrichtungen mit Signalen der Betriebsgrößen-Erfassungseinrichtung erfolgen kann. Dann können diese Informationen wirksam zum Optimieren des Bremsvorgangs genutzt werden.

Wenn mittels den der lokalen Bremssteuereinheit vorliegenden Daten eine Umsetzung der Bremssignale derart erfolgt, daß ein möglichst gleichmäßiger Verschleiß der Bremsen erzielbar ist, können die Wartungsintervalle für das Schienenfahrzeug vergrößert werden. Durch den gleichmäßigen Verschleiß der Bremsen werden diese zudem optimaler ausgenutzt, da die Bremsen an einem einzelnen Schienenfahrzeug immer insgesamt ausgewechselt werden, auch wenn einige der Bremsbeläge noch nicht abgenutzt sind. Damit lassen sich vorteilhaft Einspareffekte bewirken.

Dadurch, daß die lokalen Bremssteuereinheiten, das Zugsteuergerät, die Vorgabeeinrichtungen in den Führungsständen, die Drehgestelle und die lokalen Betriebsgrößen-Erfassungseinrichtungen über eine Sicherheitsschleife miteinander verknüpft sind, kann ferner ein noch zuverlässigeres Notbremssystem bereitgestellt werden. Daraus erhöht sich die Sicherheit des Bremssystems weiter.

Wenn die lokale Bremssteuereinheit eine lokale Steuerelektronik, eine "Fail-Safe"-Einrichtung und eine Drucksteuerung aufweist, kann auch im Falle einer Notbremsung eine gesteuerte Bremsung durchgeführt werden, welche z.B. Fahrzeugkenngrößen und aktuelle Betriebsgrößen wie auch eine Gleitschutzregelung berücksichtigt. Daher kann dieses System in zuverlässiger Weise z.B. eine Sicherheitsbremsung durchführen, bei der die Länge des Bremsweges häufig nicht von besonderer Bedeutung ist.

Von weiterem Vorteil ist es, wenn die Drucksteuerung vorzugsweise zwei in Reihe geschaltete, elektro-pneumatische Ventile zur Bremsdruckregulierung durch Be- bzw. Entlüften entsprechend des vorliegenden Bremssignal-Sollwertes und der vorliegenden Gleitschutz-Information aufweist. Durch die beiden in Reihe geschalteten Ventile lassen sich gewünschte Druckverhältnisse oder Reaktionszeiten noch besser einstellen.

Wenn die beiden Ventile als Elektromagnetventil mit vorzugsweise kleiner Leistung ausgeführt sind, kann der Schaltverbrauch gering gehalten werden, wobei dennoch schnelle Reaktionszeiten erreichbar sind.

Dadurch, daß die Drucksteuerung einen stromabwärts der beiden Ventile angeordneten Durchsatzverstärker aufweist, kann an den Bremszylindern ein ausreichender pneumatischer Druck bzw. ein ausreichender Fluiddurchsatz bereitgestellt werden. Damit lassen sich ferner noch bessere Schaltercharakteristiken im erfindungsgemäßen Bremssystem erzielen.

Ferner kann erfindungsgemäß ein zuverlässiges Notbremssystem mit geringerem konstruktiven Aufwand realisiert werden, wenn eine Notbremsung mit Hilfe eines elektrischen Signals ausgelöst wird, wobei das Auslösen der Notbremsung von einer "Fail-Safe"-Einrichtung überwacht wird, die bei nicht korrekt eingeleiteter Notbremsung eine Rückfallebene aktiviert. Somit kann das im wesentlichen durch pneumatische Komponenten geprägte Notbremssystem der bekannten Bauweisen durch ein System ersetzt werden, bei welchem die Ansteuerung des Notbremssystems die Fähigkeiten der elektronischen Steuerung des Schienenfahrzeugs zum Einleiten und Durchführen einer Notbremsung nutzt. Das elektrische Notbremssignal wird zum Auslösen der Notbremsung genutzt und dabei von einer "Fail-Safe"-Einrichtung überwacht. Damit wird sichergestellt, daß bei nicht korrekt arbeitender Steuerelektronik dennoch eine Notbremsung eingeleitet wird, da durch die "Fail-Safe"-Einrichtung eine Rückfallebene aktivierbar ist.

Die vorliegende Erfindung ermöglicht somit ein besonders sicheres Sicherheitssystem. Darüber hinaus ist der Installationsaufwand und der Raumbedarf für die elektrische Leitung wesentlich geringer wie für die pneumatische Leitung bei herkömmlichen Systemen. Weiter läßt sich auch das Gewicht der gesamten Sicherheitseinrichtung wesentlich verringern. Das erfindungsgemäße Bremssystem ist daher schneller und kostengünstiger herstellbar.

Dadurch, daß im notbremsfreien Betrieb das vorgenannte elektrische Signal in Form eines Normalbertriebssignals über eine elektrische Sicherheitsleitung weitergeleitet wird, läßt sich auf einfache Weise ein ständig verfügbares und zuverlässiges Störungsüberwachungssystem herstellen. Im Gegensatz zum pneumatischen System, bei dem ständig ein bestimmter Betriebsdruck anliegt, der mit aufwendigen Einrichtungen aufrecht erhalten wird, kann das elektrische Signal mit bekannten Einrichtungen auf einfache Weise bereitgestellt werden.

Von weiterem Vorteil ist es, wenn im Notbremsfall ein entsprechendes Notbremssignal oder ein Wegfall des Normalbetriebsignals die Notbremsung auslöst. Damit besteht die Möglichkeit, eine derartige Notbremsung sowohl passiv als auch aktiv auszulösen. Wird nämlich die Leitung für das elektrische Signal im Zugverband, zum Beispiel durch Abreißen eines Fahrzeugs oder ähnlichem, unterbrochen, so führt dies automatisch, ohne zusätzliche Einwirkung durch eine Person, zu einer Notbremsung. Weiter ist es jedoch auch durch den Zugführer oder einen Fahrgast möglich, über eine Notbremseinrichtung ein entsprechendes Notbremssignal einzuleiten, oder die Unterbrechung des elektrischen Signals zu bewirken. Das Unterbrechen des Normalbetriebssignals ist hierbei die baulich einfachere Variante.

Durch die Verwendung der elektronischen Steuerung auch für die Notbremsungen, im Gegensatz zu herkömmlichen Bremssystemen, können auch die gleichen Stellglieder (elektro-pneumatische Ventile) zur Einstellung des Notbremsdrucks verwendet werden. Dadurch verringert sich der bauliche Aufwand weiter. Die gewünschten Drücke lassen sich so sehr gut einstellen.

Dadurch, daß im Normalbetrieb die Ansteuerung der Betriebsbremsventile, sowie die Aktivierung der Steuereinheit für die Federspeicherbremse und/oder der weiteren Steuereinheiten für die weiteren Hilfsaggregate über lokale, elektronische Bremssteuereinheiten erfolgt, die über einen gemeinsamen Bremsdatenbus miteinander verbunden sind, kann das Bremsverhalten an den einzelnen Achsen aufeinander abgestimmt werden. Der Bremsvorgang läßt sich daher noch besser steuern. Dies ermöglicht insbesondere eine Berücksichtigung fahrzeugspezifischer Größen, wie zum Beispiel Art, Länge und Gewicht des Zugverbandes. Dies ist insbesondere bei Fahrernotbremsungen oder Sicherheitsbremsungen sinnvoll, um bei Ausfall bremstechnischer Einrichtungen ein Anhalten unter festgelegten Bedingungen sicherzustellen. Für diese Bremsungsart muß eine gewisse Sicherheit gewährleistet werden, ohne daß immer ein möglichst kurzer Bremsweg erforderlich ist. Diese Art der Notbremsung stellt somit sicher, daß das Fahrzeug zum Stehen gebracht werden kann, wobei eine Belastung für einen Fahrgast aufgrund der auftretenden Verzögerungen am Schienenfahrzeug in gewissen Rahmen steuerbar ist.

Wenn das Bremssystem eine Hauptluftleitung aufweist, die über ein Zugbremsventil von der Drucklufterzeugungseinrichtung gespeist wird, welche über ein Steuerventil die Bremse betätigt, kann die Erfindung auch an einem derart ausgebildeten Schienenfahrzeug angewendet werden.

Dadurch, daß den Bremsen beim Aktivieren der Rückfallebene ein voreingestellter Bremsdruck zugeführt ist, wird sichergestellt, daß ein ausreichender Bremsdruck bereitgestellt werden kann, wenn eine Notbremsung erforderlich ist.

Ist der voreingestellte Bremsdruck ein fest eingestellter Bremsdruck, der während des Betriebs unverändert bleibt, so kann der bauliche Aufwand für das Bremssystem weiter verringert werden, da auf Steuerungselemente verzichtet werden kann.

Wenn der Bremsdruck der Beladung des Fahrzeugs angepaßt ist, kann der Bremsvorgang noch gezielter und kontrollierter durchgeführt werden.

Überdies kann die Erfindung ein Bremssystem für ein Schienenfahrzeug bereitstellen, bei dem der bauliche Aufwand für das Ansteuerungssystem der Betriebsbremse und eventueller Hilfsaggregate verringert ist, da das Rückschlagventil und der Druckluftbehälter im oder am Drehgestell angeordnet sind. Durch diese bauliche Dezentralisierung des Bremssystems können somit die für die Funktion erforderlichen Einrichtungen dort angeordnet werden, wo sie auch tatsächlich ihre Wirkung entfalten sollen. Da dadurch zwischen jedem Drehgestell und dem Fahrzeugaufbau nur noch eine Zuleitung von der Hauptluftbehälterleitung erforderlich ist, verringert sich der bauliche Aufwand zwischen diesen Bereichen wesentlich.

Ein weiterer Vorteil liegt darin, daß auf diese Weise sehr kurze Verrohrungswege im Drehgestell zum Beispiel für die Aufteilung des Ansteuerdrucks auf die einzelnen Achsen entstehen. Dadurch lassen sich sowohl die Materialkosten als auch das Gewicht der Anordnung verringern.

Vorteilhaft ist ferner, daß das Rückschlagventil und der Druckluftbehälter vorab im Drehgestell montiert werden kann und sich somit die Endmontage des Schienenfahrzeugs wesentlich vereinfacht. Dadurch lassen sich günstigere Fertigungsabläufe erzielen, was sich vorteilhaft hinsichtlich der Fertigungsdauer und der Kosten auswirkt.

Das erfindungsgemäße Bremssystem ermöglicht ferner eine wesentliche logistische Vereinfachung gegenüber bekannten Systemen, wodurch es zuverlässiger und einfacher zu überwachen ist.

Von weiterem Vorteil ist hierbei, daß damit im Fahrzeugaufbau mehr Platz für andere Einrichtungen zur Verfügung steht. Die Anordnung des Rückschlagventils und des Druckluftbehälters im Drehgestell ist dabei relativ unproblematisch, da hier ausreichend Platz vorhanden ist. Daher erweitern sich die konstruktiven Möglichkeiten für die Gestaltung des Schienenfahrzeugs.

Wenn wenigstens eine weitere Steuereinheit als Überwachungseinheit zur Überwachung des Auslösens einer Notbremsung genutzt wird, bietet dies den Vorteil einer erhöhten Ausfallsicherheit. Die Notbrems-Sicherheitsleitung ist mit der Steuereinheit und der "Fail-Safe"-Einrichtung verbunden. Letztere überwacht als erste Kontrollinstanz ein Ausgangssignal der Steuereinheit, um sicherzustellen, daß die Steuereinheit die gesteuerte Notbremsung korrekt eingeleitet hat. Sollte dies nicht der Fall sein, so wird ein Umschalten auf die pneumatische Rückfallebene bewirkt, d.h. eine pneumatische Notbremsung des Systems veranlaßt. Der Einsatz einer weiteren Steuereinheit als zusätzliche Überwachungseinheit bzw. zweite Kontrollinstanz hilft sicherzustellen, daß ein Umschalten auf die pneumatische Rückfallebene wirklich nur im absoluten Notfall erfolgen muß und ermöglicht zudem eine verbesserte Überprüfung und lastabhängige Regelung einer korrekt eingeleiteten, gesteuerten Notbremsung, so daß fahrzeugspezfische Daten bzw. aktuelle Betriebsgrößen bei der Durchführung der Notbremsung aufgrund der Vergleichswerte der zusätzlichen Überwachungseinheit bzw. zweiten Kontrollinstanz differenzierter berücksichtigt werden können, was beispielsweise in einer verbesserten Schlupfregelung und damit in einer optimalen Haftwertausnutzung zum Erreichen eines geforderten Bremsweges resultiert und Flachstellen sowie die damit verbundenen Reparaturkosten weiter vermeiden hilft. Zudem ist auf diese Weise selbst bei einem Ausfall der ersten Überwachungseinheit eine sichere Notbremsung gewährleistet. Die weitere Überwachungseinheit bzw. zweite Kontrollinstanz kann dabei vorzugsweise in einem weiteren, zweiten Drehgestell untergebracht sein.

Gemäß eines weiteren Aspekts wird eine Bremssteuereinheit für ein Bremssystem eines Schienenfahrzeugs bereitgestellt, welches dadurch gekennzeichnet ist, daß die Bremssteuereinheit im Drehgestell angeordnet ist, wobei der Bremssteuereinheit Bremssignale über einen zentralen Bremsdatenbus zugeführt werden, und wobei die Bremssteuereinheit zur Ansteuerung von Betriebsbremsventilen und/oder zur Ansteuerung der Federspeicherbremse und/oder zur Ansteuerung weiterer Hilfsaggregate vorgesehen ist.

Die Bremssteuereinheit kann so als ein an sich selbständiges Modul am Drehgestell vorgesehen werden und ermöglicht konstruktive Freiheit hinsichtlich des Fahrzeugaufbaus. Des weiteren lassen sich mit dieser Bremssteuereinheit die oben diskutierten zusätzlichen Vorteile erzielen.

Die Erfindung wird nachfolgend in Ausführungsbeispielen anhand der Figuren der Zeichnung näher erläutert. Es zeigt:
- Fig. 1: einen schematischen Aufbau des erfindungsgemäßen Bremssystems;
- Fig.2: eine schematische Übersicht über Detaileinrichtungen des erfindungsgemäßen Bremssystems an einem Drehgestell;
- Fig. 3: die elektropneumatische Drucksteuereinrichtung des Bremssystems im Detail;
- Fig. 4: eine schematische Darstellung des pneumatischen Bremsmoduls,
- Fig. 5: eine schematische Darstellung der Signalwege für ein erfindungsgemäßes Bremssystem; und
- Fig.6: eine weitere Systemdarstellung des erfindungsgemäßen Bremssystems.

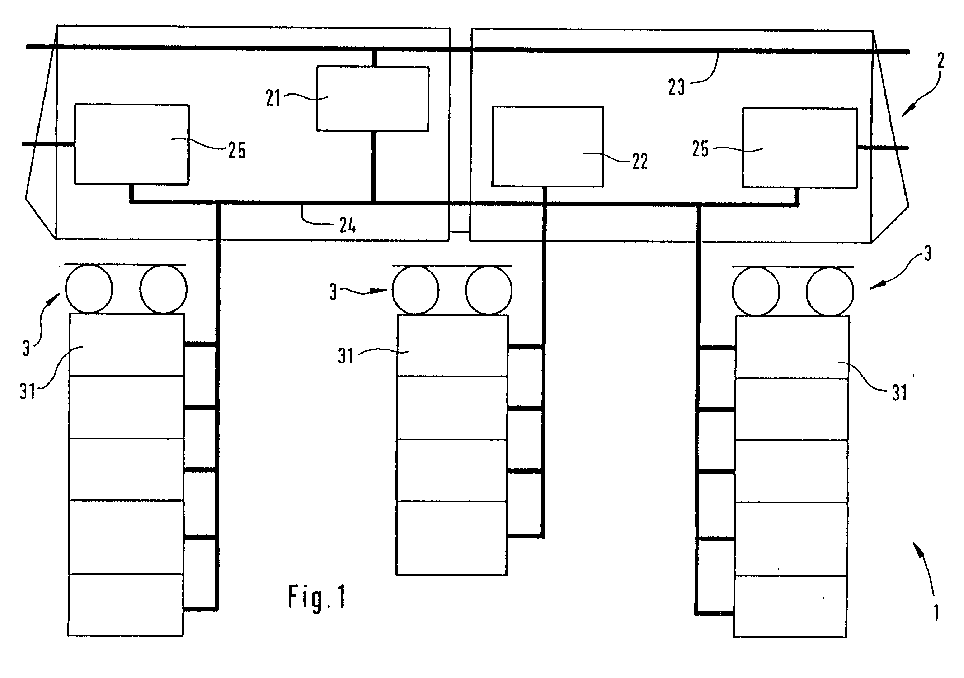

Gemäß der schematischen Darstellung in Fig. 1 weist ein Schienenfahrzeug 1 im wesentlichen einen Fahrzeugaufbau 2 und im vorliegenden Ausführungsbeispiel drei Drehgestelle 3 auf. Das Schienenfahrzeug 1 ist hier als Zugfahrzeug dargestellt, wobei auch weitere angetriebene oder nicht angetriebene Fahrzeuge zur Ausbildung eines Zugverbandes angekoppelt sein können.

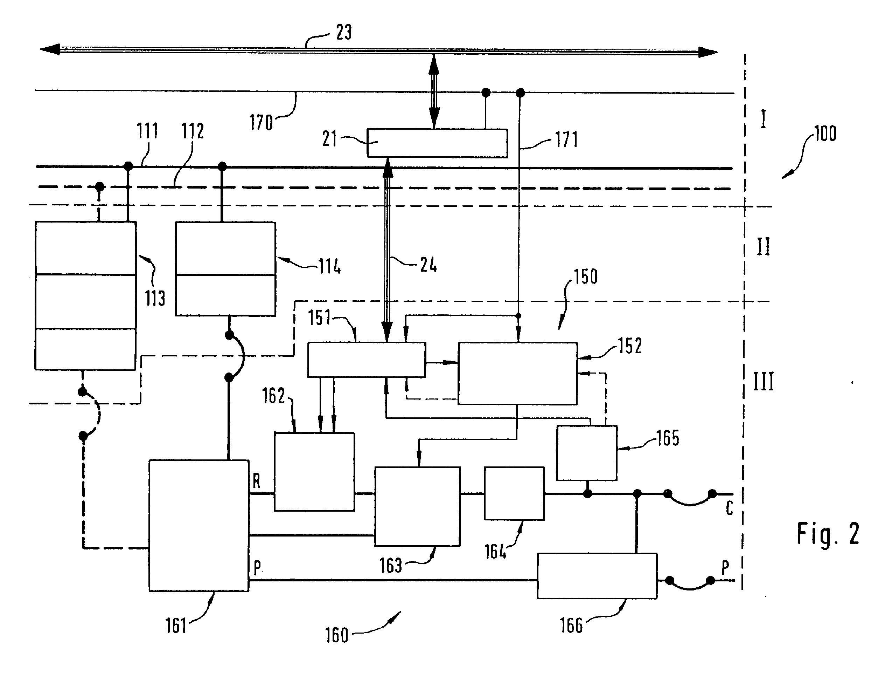

In Fig. 1 ist die elektronische Ansteuerung des Bremssystems des Schienenfahrzeugs 1 gezeigt. Eine zentrale Steuereinheit 21 und eine Drucklufterzeugungseinrichtung 22 sind im Fahrzeugaufbau 2 angeordnet. Die zentrale Steuereinheit 21 erhält durch einen Fahrzeugdatenbus-23 Betriebsdaten über das gesamte Schienenfahrzeug bzw. vom gesamten Zugverband. Die hieraus abgeleiteten Steuerungsdaten für das Bremssystem des Schienenfahrzeugs werden über einen Bremsdatenbus 24 an die Lufterzeugungseinrichtung und die lokalen Steuereinheiten 31 und optional weiter vorhandenen Funktionsmodulen in den Drehgestellen 3 weitergegeben. Über Anschlußeinheiten 25 können diese Daten auch an weitere Fahrzeuge eines Zugverbandes weiter geleitet werden. Die pneumatischen Einrichtungen sind aus Fig. 2 ersichtlich.

In Fig. 2 ist eine Ausführungsform eines Bremssystems 100 in näherem Detail dargestellt. Das Bremssystem 100 erstreckt sich hierbei insgesamt über drei Ebenen des Schienenfahrzeugs 1, welche in Fig. 2 auf der rechten Seite mit römischen Buchstaben I, II und III gekennzeichnet sind. In dem mit I eingegrenzten Bereich sind die im Fahrzeugaufbau angeordneten Einrichtungen dargestellt. II zeigt die im Wagenkasten angeordneten Vorrichtungen, während III die in einem Drehgestell angeordneten elektrischen und pneumatischen Module zeigt.

Zusätzlich zu den elektrischen Leitungen sind in Fig. 2 auch die pneumatischen Leitungen gezeigt. So wird ein pneumatisches Bremsmodul 160 von einer Druckluftleitung 111 und in dieser Ausführungsform von einer pneumatischen Steuerleitung 112 gespeist. Die pneumatische Steuerleitung 112 und die Druckluftleitung 111 wirken dabei auf ein Steuerventil 113 mit lastabhängiger Druckbegrenzung und einer Absperrvorrichtung ein, welches im Wagenkasten angeordnet ist. Der Pneumatikdruck in der Druckluftleitung 111 liegt zudem an einer Puffereinrichtung 114 für den Versorgungsdruck mit einer Absperrvorrichtung an, welche ebenfalls im Wagenkasten angeordnet ist.

Die Ausgabedrücke des Steuerventils 113 und der Puffereinrichtung 114 werden einer Drucksteuerung 161 im Drehgestell zugeführt. Diese Drucksteuerung 161 stellt über eine elektropneumatische Drucksteuerungseinrichtung 162, ein Umschaltmodul 163 und ein als Durchsatzverstärker wirkendes Relaisventil 164 den gewünschten Bremszylinderdruck an einer Ausgabestelle C ein. Dieser Ausgabedruck wird durch einen Drucksensor 165 überwacht.

Die Drucksteuerung 161 wirkt ferner auf eine Ansteuereinheit 166 für eine Parkbremse P ein.

Die im Drehgestell angeordnete lokale Bremssteuereinheit 150 weist eine Steuerelektronik 151 und eine "Fail-Safe"-Überwachungseinheit 152 auf.

Wie aus Fig. 2 ersichtlich ist, wird die Steuereinheit 151 über den Bremsdatenbus 24 mit Steuersignalen von der zentralen Bremssteuereinheit 21 versorgt. Ferner verbindet eine Schleife 171 eine Notbrems-Sicherheitsleitung 170 mit der Steuereinheit 151 und der "Fail-Safe"-Überwachungseinheit 152. Die Steuereinheit 151 steuert die elektropneumatische Drucksteuereinrichtung 162. Wird durch die Schleife 171 angezeigt, daß eine Notbremsung erforderlich ist, überwacht die "Fail-Safe"-Überwachungseinheit 152 zudem ein Ausgangssignal der Steuereinheit 151, um sicherzustellen, daß die Steuereinheit 151 die Notbremsung korrekt eingeleitet hat.

Ist dies nicht der Fall, so wirkt die Fail-Safe-Überwachungseinheit 152 direkt auf das Umschaltmodul 163 ein und bewirkt ein Umschalten auf die pneumatische Rückfallebene, das heißt eine pneumatische Notbremsung des Systems.

Wenn die Steuereinheit 151 eine korrekte Notbremsung eingeleitet hat, wird diese gesteuert durchgeführt, das heißt es können fahrzeugspezifische Daten und/aktuelle Betriebsgrößen bei der Durchführung der Notbremsung ebenso berücksichtigt werden wie zum Beispiel eine Schlupfregelung.

Wie in Fig. 2 ferner dargestellt ist, kann die zentrale Bremssteuereinheit 21 ebenfalls mit der Notbremssicherheitsleitung 170 verbunden sein, um über den Bremsdatenbus 24 auf die dezentrale Steuereinheit 151 einzuwirken. Bei entsprechender Ausgestaltung der elektronischen Steuereinheit 151 zur Verarbeitung derartiger zusätzlicher Daten ist es jedoch auch möglich, daß diese die Notbremsung unabhängig und dezentral von der zentralen Bremssteuereinheit 21 ausführt.

Fig. 2 zeigt den Systemaufbau an einer Fahrachse bzw. einem Drehgestell des Schienenfahrzeugs 1. Die im Wagenkasten angeordneten Bauelemente und insbesondere die im Drehgestell vorgesehenen Einrichtungen sind an jedem einzelnen Wagenkasten bzw. Drehgestell vorgesehen, wobei die fahrzeugaufbauseitige zentrale Bremssteuereinheit 21 nur einmal pro Fahrzeug oder Zugverband erforderlich ist.

Nachfolgend sei die Funktion und Struktur des dezentralen Bremssteuermoduls im näheren Detail erläutert. Es führt folgenden Funktionen an einem Drehgestell aus:
- geregelte Einstellung eines angeforderten Bremszylinderdrucks für das Drehgestell oder für jede einzelne Achse;
- Gleitschutz: Erfassung und Auswertung der Achs- bzw. Raddrehzahlen. Bei Auftreten unzulässig hoher Schlupfwerte während des Bremsens wird eine schnelle Veränderung des drehgestell- oder achsweise eingestellten Bremszylinderdrucks ermittelt und der Bremszylinderdruck entsprechend schnell korrigiert;
- Ermittlung des Beladungszustands des Drehgestells beispielsweise aus den beiden Federbalgdrücken; und
- Überwachung und Diagnose aller beeinflußten elektropneumatischen und sensorischen Komponenten.

Das dezentrale Bremssteuermodul gemäß dieser Ausführungsform ist für die Ansteuerung aktiver Bremszylinder konzipiert. Wie oben bereits erläutert wurde setzt sich das beispielhaft beschriebene Modul aus einer Kompaktventilbaugruppe, einer an die Steuerfunktion angepaßten Steuerelektronik sowie einer für die Gewährleistung der signaltechnischen Sicherheit des Moduls erforderlichen Überwachungsbaugruppe zusammen. Zu diesem Modul können neben den mechanischen Komponenten auch eine standardisierte Funktionssoftware zählen. Das Bremssteuermodul erhält eine Bremsanforderung vorzugsweise über zwei Signalwege: den Bremssystembus und die Notbremsschleife.

Jede Bremsanforderung wird dabei elektropneumatisch mittels der Steuerelektronik und entsprechenden Elektromagnetventilen als Stellglieder bedient. Somit wird auch das Signal der Notbremsschleife von der Steuerelektronik eingelesen und weiterverarbeitet. Eine über diesen Signalweg ausgelöste Bremsung ist lastkorrigiert und durch den Gleitschutz unterstützt.

Im Falle einer schweren Funktionsstörung der elektronischen/elektropneumatischen Steuerung verfügt das Bremssteuermodul zudem über die rein pneumatisch ausgeführte Rückfallebene, die bei einer Bremsanforderung über die Notbremsschleife einen festen Bremsdruck einsteuert, der nicht lastkorrigiert ist und auch keine Gleitschutzregelung aufweist.

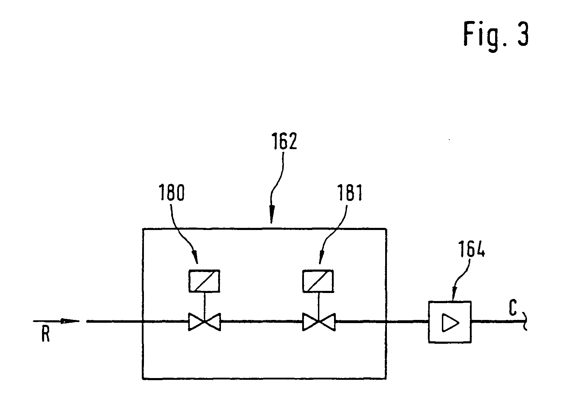

Fig. 3 zeigt einen Teil der elektro-pneumatischen Drucksteuerungseinrichtung 162 und insbesondere die beiden in Reihe geschalteten elektro-pneumatischen Ventile 180 und 181. Dabei dient das Ventil 180 dem Druckaufbau während das andere Ventil 181 den Druckabbau ermöglicht. Damit können bei kleiner Luftdurchsetzung schnelle Reaktionszeiten erzielt werden. Der nachgeschaltete Durchsatzverstärker 164 sorgt schließlich für ein ausreichendes Maß an Druckluftdurchsatz, damit der Bremszylinder mit dem gewünschten Bremsdruck beaufschlagt werden kann.

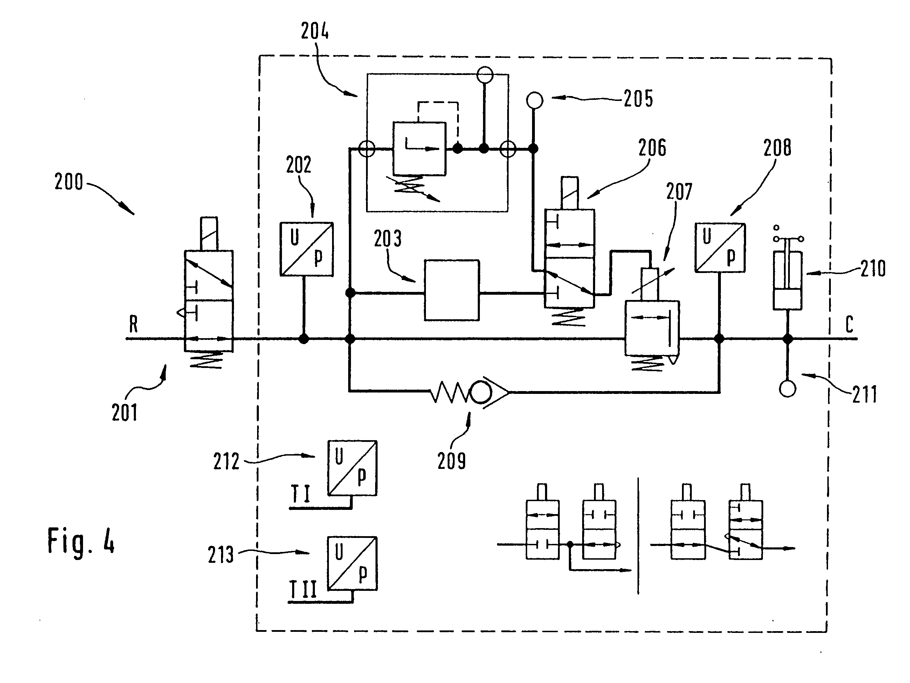

Fig. 4 zeigt ein Beispiel für eine zur Ausführung der definierten Funktionen geeignete Struktur der pneumatischen Steuerung.

Eine im Drehgestell angeordnete pneumatische Steuerung 200 weist auf Seiten der externen Einspeisung zunächst ein Hilfslöseventil 201 auf. Über einen Drucksensor 202 wird der Pneumatikdruck auf das Drucksteuerventil 203 und parallel hierzu auf das Druckminderventil 204 geführt. Dem anschließenden Notbremsumschaltventil 206 vorgeschaltet ist ein Kontrollstutzen 205. Auf der Abgabenseite des Notbremsumschaltventils 206 ist ein Relaisventil 207 angeschlossen, an dem zu dem direkt der Eingangsluftdruck anliegt. Am Ausgang des Relaisventils 207 ist ein weiterer Drucksensor 208 für die Erfassung des Bremsdrucks vorgesehen. Dieser Anordnung parallel geschalten ist zudem ein Rückschlagventil 209. Nach dem Relaisventil 207 ist ferner einer Druckschalter 210 und ein Kontrollstutzen 211 vorgesehen, mittels dem die Bremse lösbar ist. Der vom Relaisventil 207 abgegebene pneumatische Druck wirkt auf den Bremszylinder. Zudem sind weitere T-Drucksensoren 212 und 213 vorgesehen.

### Nachfolgend werden diese Komponenten näher beschrieben:

Der Drucksensor 202 mißt den am Modul 200 anstehenden Versorgungsdruck. Die beiden Sensoren 212 und 213 dienen zur individuellen Erfassung der Lastdrücke der beiden Luftfederbälge, um Aufschluß über den Lastzustand des Schienenfahrzeugs zu erhalten. Das Drucksteuerventil 203 enthält als Stellglied des Druckregelkreises zwei Schaltventile, wie sie in Figur 3 dargestellt sind. Im nicht angesteuerten Zustand beider Ventile stellt sich ein Druck gleich 0 Bar ein. Hierbei können zwei 2/2-Wege-Ventile zur Anwendung kommen, wobei das erste Ventil als NC (Belüfter) und das zweite Ventil als NO (Entlüfter) ausgebildet sein kann. Alternativ kann das zweite Ventil auch ein 3/2-Wege-Ventil sein. Diese Drucksteuerventile werden von der Elektronik angesteuert und mit einer stabilisierten Spannung versorgt. Diese beträgt im vorliegenden Ausführungsbeispiel nominal 24 Volt.

Das zum Drucksteuerventil 203 parallel geschaltete Druckminderventil 204 dient der Einstellung eines Drucks, der bei Aktivierung der pneumatischen Rückfallebene als Bremszylinderdruck eingesteuert wird. Das Notbremsumschaltventil 206 aktiviert die pneumatische Rückfallebene bei Störung der elektronisch gestützten Bremsfunktion.

Das nachgeschaltete Relaisventil 207 dient zur Verstärkung des Luftdurchsatzes. Es erfüllt dabei die für die Gleitschutzfunktion erforderlichen Be- und Entlüftegradienten.

Der Drucksensor 208 nach dem Relaisventil 207 dient zur Erfassung des IstWertes des Bremsdrucks, der eine Regelgröße des Druckregelkreises darstellt. Der Sensor erfüllt dabei die ausreichende Genauigkeit für die Druckregeln und seine Eingänge sind auf die Steuerelektronik des Moduls ausgelegt.

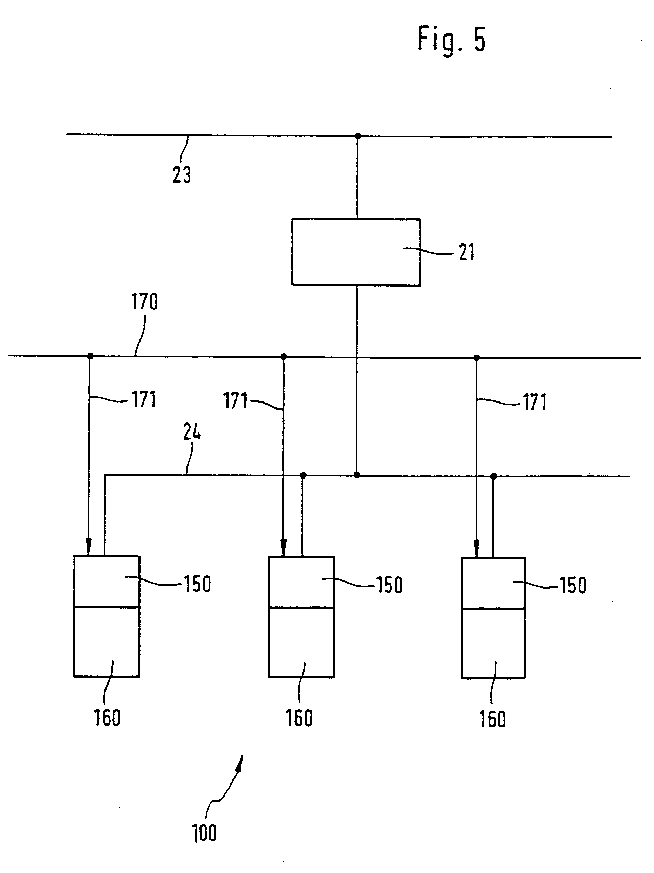

Bei einer achsweisen Steuerung sind diese Elemente im wesentlichen doppelt vorhanden. Eine schematische Übersicht über die Notbremseinrichtung im Zugverband ist in Fig. 5 gezeigt. Hierbei weist das Bremssystem 100 die zentrale elektronische Bremssteuereinheit 21 auf, die über einen Datenbus 23 des Schienenfahrzeugs bzw. Zugverbands mit den fahrzeugspezifischen Informationen und aktuellen Betriebsdaten versorgt wird. Von der zentralen Bremssteuereinheit 21 führt der Bremsdatenbus 24 zu der Mehrzahl von lokalen Bremssteuereinheiten 150, welche jeweils in einem Drehgestell 3 angeordnet sind. Jede lokale Bremssteuereinheit 150 ist an ein pneumatisches Bremsmodul 160 gekoppelt, welches durch das pneumatische System des Schienenfahrzeugs 1 mit Druckluft versorgt wird. Jedes pneumatische Bremsmodul 160 weist Bremseinrichtungen und damit zusammenwirkende Einrichtungen auf und wird durch die jeweilige lokale Bremssteuereinheit 150 angesteuert.

Zusätzlich weist das Bremssystem 100 noch die elektrische Notbrems-Sicherheitsleitung 170 auf, welche über Schleifen 171 mit den lokalen Bremssteuereinheiten 150 verbunden ist. Die Notbrems-Sicherheitsleitung 170 erstreckt sich durch den Zugverband und ist im Betrieb mit einem elektrischen Signal beaufschlagt. Wird dieses Signal unterbrochen, so löst dies in den lokalen Bremssteuereinheiten 150 die Durchführung einer Notbremsung im Zugverband aus.

Die Druckregelung im System wird durch den Druckregelkreis verwirklicht, wobei die an das dezentrale Bremssteuermodul übermittelte Bremsanforderung (Bremssollwert über Bremsdatenbus, festverdrahtete Bremsanforderung) als Drucksollwert vom Druckregelkreis weiterverarbeitet wird. Der Druckregelkreis wird dabei durch einen durch Software realisierten Druckregeler (Steuerelektronik), einen Drucksensor und den zugehörigen Analogeingang (Eingangsverstärker und AD-Umsetzer) der Steuerelektronik zur Erfassung der Regelgröße, Leitungsendstufen der Steuerelektronik, elektropneumatische Drucksteuerventile als Stellglied und das Relaisventil zur pneumatischen Durchsatzverstärkung gebildet.

Dabei kommt der Wiederholgenauigkeit bei der Bremszylinderdruckregelung in einem verteilten Bremssteuersystem in der Praxis eine höhere Bedeutung zu als der Absolutgenauigkeit des eingestellten Druckwertes, da ein Fahrzeugführer immer ein gleichbleibendes Bremsverhalten erwarten und weniger auf den exakten Bremsdruck achtet. Die Auswirkungen externer Einflußgrößen wie Temperatur, Drift, Alterung, schwankende Versorgung etc. auf die Komponenten sind daher zu berücksichtigen.

Das erfindungsgemäße Bremssteuermodul ist für die Ansteuerung der Betriebs- und Notbremse eines Drehgestells ausgelegt. Dies beinhaltet die kontinuierliche Bremsdruckregelung in vorbestimmten Druckbereich, die Einsteuerung eines Notbremsdruckes und eine Gleitschutzfunktion. Für das Drehgestellmodul wird ein definiertes Ausfallverhalten gefordert, daß heißt in jedem Betriebszustand stellt sich ein eindeutig definierter Zustand der Bremse ein:
- arbeitet die Elektronik fehlerfrei, so ist die Bremse gelöst bzw. durch die Bremsanforderung einstellbar;
- arbeitet die Elektronik fehlerfrei und ist eine Notbremsung ausgelöst, so wir die Bremse mit Lastkorrektur und Gleitschutz aktiviert;
- arbeitet die Elektronik fehlerhaft und ist keine Notbremsung ausgelöst, so ist die Bremse gelöst;
- arbeitet die Elektronik fehlerhaft und ist eine Notbremsung ausgelöst, so wird die Bremse mit Feststufe aktiviert.

Das erfindungsgemäße Bremssystem führt zudem eine Gleitschutzregelung aus, wobei ein Gleitschutzregelkreis auch bei schlechten Haftwertbedingungen zwischen Rad und Schiene die Einhaltung eines zulässigen Schlupfwertes ermöglicht. Ein Gleiten des Fahrzeugs wird durch den Gleitschutzregelkreis wirksam verhindert. Hierzu besteht er im wesentlichen aus Drehzahlsensoren an den Radsätzen oder am Getriebe zur Erfassung der tatsächlichen Radgeschwindigkeit, einer durch Software realisierten Verarbeitungslogik, die zur Berechnung einer Referenzgeschwindigkeit als Maß der tatsächlichen Fahrzeuggeschwindigkeit und zur Ermittlung von Stellbefehlen zur Beeinflussung des Bremszylinderdrucks bei Auftreten zu hoher Schlupfwerte an einzelnen Radsätzen dient, und einem geeigneten Stellglied zur Beeinflussung des eingeregelten Bremszylinderdrucks.

Beim dezentralen Bremssteuermodul kann der Bremszylinderdruck auch ausschließlich über die Drucksteuerung beeinflußt werden. Dabei greift die Gleitschutzregelung entweder parallel zum Druckregler auf die Drucksteuerventile zu oder sie nutzt den Druckregelkreis als Stellglied.

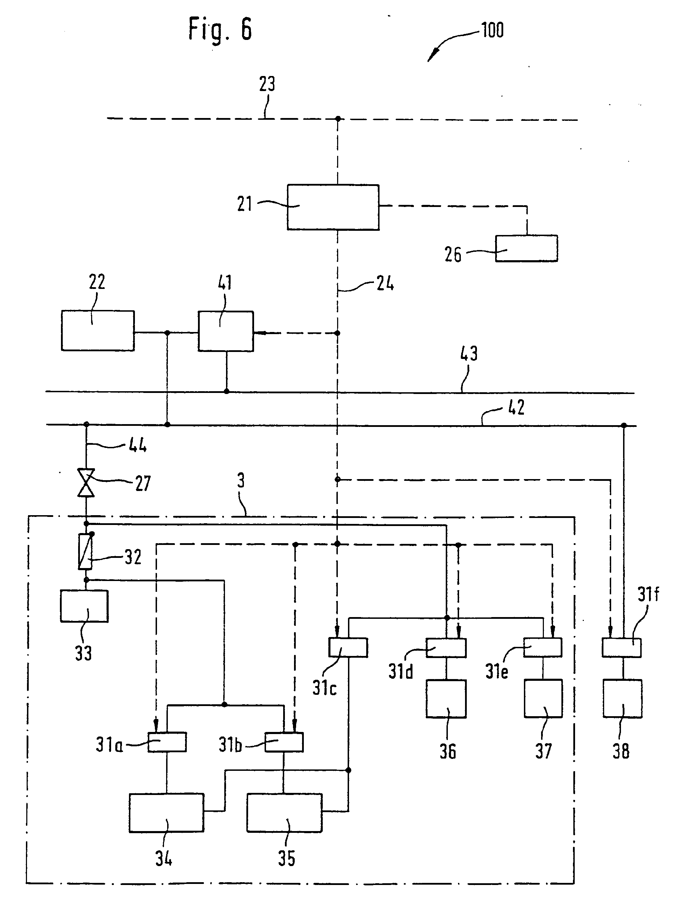

In Fig. 6 sind schematisch weitere Details des Bremssystems 100 an einem Drehgestell 3 gezeigt. Die elektrischen Leitungen sind in Figur 6 mit gestrichelten Linien dargestellt. Pneumatische Leitungen sind als durchgezogene Linien dargestellt. Die in einem Drehgestell 3 angeordeten Einrichtungen sind in einem strichpunktierten Rahmen aufgenommen.

Das elektronische Ansteuerungssystem weist somit die zentrale Steuereinheit 21 auf, welche vom Fahrzeugdatenbus 23 und zusätzlich von einer vom Bediener des Schienenfahrzeugs beaufschlagten Vorgabeeinrichtung 26 die zur Steuerung des Bremssystems erforderlichen Daten empfängt. Damit liegen der zentralen Steuereinheit 21 Informationen über die Art des Zugverbandes, dessen Länge, Masse, Geschwindigkeit ebenso vor, wie auch aktuelle Betriebsgrößen wie Schlupf, Achslast, Raddrehzahl, Ist-Verzögerung und Drehgestellast berücksichtigt werden können. Diese Daten werden von der zentralen Steuereinheit 21 ausgegeben und über den Bremsdatenbus 24 jeder lokalen Steuereinheit 31 zugeführt. Zur Verdeutlichung der Funktionsweise ist diese lokale Steuereinheit 31 in Fig. 6 in einzelne Steuereinheitsbereiche 31a bis 31f für unterschiedliche anzusteuernde Einrichtungen aufgeteilt. Durch den Bremsdatenbus 24 wird zudem auch ein Zugbremsventil 41 angesteuert.

Das pneumatische System des Schienenfahrzeugs 1 weist die Drucklufterzeugungseinrichtung 22 auf, durch welche eine Hauptluftbehälterleitung 42 gespeist wird. Ferner wird über das Zugbremsventil 41 auch eine Hauptluftleitung 43 gespeist. An die Hauptluftleitung 43 können über entsprechende Vorrichtungen die einzelnen Fahrzeuge eines Zugverbandes angeschlossen werden. Hierbei wird ein Druck vorgegeben, bei dem die Zugbremsen vollständig gelöst sind. Dieser Druck kann durch Einwirkung der zentralen Steuereinheit 21 derart eingestellt werden, daß das Schienenfahrzeug in gewünschter Weise gebremst wird.

Die Hauptluftbehälterleitung 42 dient zur Ansteuerung der Bremseinrichtungen eines Drehgestells 3 des Zugfahrzeuges. Hierzu zweigt sich eine Druckluftleitung 44 von der Hauptluftbehälterleitung 42 ab und führt Druckluft über ein Absperrventil 27 zu einem im Drehgestell 3 angeordneten Rückschlagventil 32 und einen Druckluftbehälter 33. Dieser Druckluftbehälter 33 dient zur Sicherstellung der Einsatzfähigkeit der Bremseinrichtungen jedes Drehgestells 3 bei Ausfall der Hauptluftbehälterleitung 42.

Weiter sind an diese Druckluftleitung 44 in dieser Ausführungsform die lokalen Steuereinheiten 31a bis 31e angekoppelt. Die lokalen Steuereinheiten 31a und 31b weisen hierbei Betriebsbremsventile auf, mittels denen der erforderliche Bremszylinderdruck in Bremseinrichtungen 34 und 35 stufenlos einstellbar ist.

Des weiteren versorgt die Druckluftleitung 44 auch die lokale Steuereinheit 31c, durch welche Federspeicherbremsen in den Bremseinrichtungen 34 und 35 aktivierbar sind.

Die Druckluftleitung 44 versorgt zudem eine lokale Steuereinheit 31d, durch welche Putzklötze 36 ansteuerbar sind. Weiter wird eine lokale Steuereinheit 31e versorgt, welche zur Ansteuerung einer Spurkranzschmierungseinrichtung 37 dient.

In der vorliegenden Ausführungsform gemäß Fig. 6 ist zudem eine weitere lokale Steuereinheit 31f gezeigt, welche nicht zwingend im Drehgestell 3 angeordnet sein muß und zum Aktivieren einer Sandungseinrichtung 38 dient. Diese Einrichtungen 38 können jedoch auch direkt an die Druckluftbehälterleitung 42 anstelle an die Druckluftleitung 44 angekoppelt sein.

In der vorliegenden Ausführungsform arbeiten sowohl das Zugbremsventil 41 als auch die Bremsventile in den lokalen Steuereinheiten 31a und 31b nach dem Ruhestromprinzip. Im Falle einer Störung des Systems entlüftet das Zugbremsventil 41 daher die Hauptluftleitung, während die Bremsventile die Bremseinrichtungen 34 und 35 belüftet werden. Dadurch wird eine Notbremsung ausgelöst.

In Fig. 6 ist die Erfindung am Beispiel eines Drehgestells 3 erläutert. Je nach Art und Aufbau kann das Schienenfahrzeug 1 eine unterschiedliche Anzahl an Drehgestellen 3 aufweisen. In der Regel weist das Führungsfahrzeug zwei oder wie in Fig. 1 gezeigt drei Drehgestelle 3 auf. Diese Drehgestelle 3 sind wie oben erläutert als dezentrale Modularsysteme aufgebaut, welche vom Fahrzeugaufbau 2 noch über den Bremsdatenbus 24 und die Druckluftleitung 44 angekoppelt sind.

Um die Baugröße im Drehgestell 3 gering halten zu können, kann der Druckluftbehälter 33 integral am Rahmen des Drehgestells 3 durch Dichtschweißen eines Teilbereichs hiervon ausgebildet sein. Alternativ kann der Druckluftbehälter 33 auch in einen Teilbereich des Drehgestellrahmens eingebaut sein. Weiter kann erfindungsgemäß auch das Rückschlagventil 32 am Drehgestellrahmen angeordnet sein.

Das Rückschlagventil 32 und/oder der Druckluftbehälter 33 können einmal pro Drehgestell 3 oder für jede Achse einzeln vorgesehen sein. Ferner kann auch nur das Rückschlagventil 32 oder der Druckluftbehälter 33 im Drehgestell angeordnet sein.

Die lokalen Bremssteuereinheiten können zudem auch Signale von Einrichtungen zur Überwachung und automatischen Betriebsführung, z.B. ATO (Automatic Train Operation), ATC (Automatic Train Control) oder ATP (Automatic Train Protection), zur Steuerung des Bremsvorgangs nutzen.

Weitere Details des erfindungsgemäßen Bremssystems sind Gegenstand der prioritätsbegründenden deutschen Patentanmeldungen mit den Aktenzeichen DE 198 48 990.0, DE 198 48 992.7, DE 198 48 994.3 und DE 198 48 995.1.

Die Erfindung schafft somit ein Bremssystem für ein Schienenfahrzeug, bei dem lokale elektronische Bremssteuereinheiten zu einer wesentlichen Vereinfachung der Versorgungslogistik verhelfen. Damit läßt sich nicht nur der konstruktive Aufwand am Schienenfahrzeug deutlich verringern, sondern es werden auch in allen Betriebszuständen die erforderlichen Bremsfunktionen bereitgestellt, um einen sicheren Stillstand des Schienenfahrzeuges herbeiführen zu können.

## Patentansprüche

1. Bremssystem (100) für ein Schienenfahrzeug (1) mit einer Hauptluftbehälterleitung (42), die von einer Drucklufterzeugungseinrichtung (22) gespeist wird, wobei jedem Drehgestell (3) wenigstens eine Druckluftleitung (44) zugeführt ist, welche über ein Rückschlagventil (32) und einen Druckluftbehälter (33) mit der Hauptluftbehälterleitung (42) verbunden ist, und welche die Betriebsbremsventile zur Beaufschlagung von Bremsen (34, 35) des Drehgestells (3) oder eine Steuereinheit (31c) für die Federspeicherbremse und/oder weitere Steuereinheiten (3 1 d, 3 1 e) für weitere Hilfsaggregate (36, 37) speist, **dadurch gekennzeichnet, daß** die Druckluftleitung (44) weiterhin über ein Absperrventil (27) mit der Hauptluftbehälterleitung (42) verbunden ist und das Rückschlagventil (32) und der Druckluftbehälter (33) im oder am Drehgestell (3) angeordnet sind, wobei der Rahmen und/oder andere konstruktive Elemente des Drehgestells (3) zumindest abschnittsweise als Druckluftbehälter (33) ausgebildet sind.

2. Bremssystem nach Anspruch 1, **dadurch gekennzeichnet, daß** die Ansteuerung der Betriebsbremsventile und/oder die Ansteuerung der Federspeicherbremse und/oder die Ansteuerung weiterer Hilfsaggregate (36, 37) über wenigstens eine lokale, elektronische Bremssteuereinheit (31) erfolgt.

3. Bremssystem nach wenigstens einem der Ansprüche 1 oder 2, **dadurch gekennzeichnet, daß** die lokale Bremssteuereinheit (31) achsweise und/oder drehgestellweise im Drehgestell (3) oder am Wagenkasten im Bereich des Drehgestells plaziert ist.

4. Bremssystem nach Anspruch 2 oder 3, **dadurch gekennzeichnet, daß** der lokalen Bremssteuereinheit (31) Bremssignale von vom Lokführer bedienbaren Vorgabeeinrichtungen (26) und Signale von lokalen Einrichtungen zur Erfassung von aktuellen Betriebsgrößen - wie Schlupf, Achslast, Raddrehzahl, Ist-Verzögerung und Drehgestellast - und/oder Signale von Einrichtungen zur Überwachung und automatischen Betriebsführung (ATO, ATC, ATP) eingangsseitig vorliegen.

5. Bremssystem nach Anspruch 4, **dadurch gekennzeichnet, daß** die Bremssignale der Vorgabeeinrichtungen über einen zentralen Schienenfahrzeug-Datenbus (23) zu wenigstens einem als geeignete Schnittstelle ausgebildeten Gateway geleitet werden, von wo aus diese bzw. korrespondierende Bremssignale über einen zentralen Bremsdatenbus an die lokalen Bremssteuereinheiten (31) weitergeleitet werden.

6. Bremssystem nach Anspruch 4, **dadurch gekennzeichnet, daß** die Bremssignale direkt von einem zentralen Schienenfahrzeug-Datenbus (23) zu den lokalen Bremssteuereinheiten (31) geleitet werden.

7. Bremssystem nach wenigstens einem der Ansprüche 4 bis 6, **dadurch gekennzeichnet, daß** die lokale Einrichtung zur Erfassung von aktuellen Betriebsgrößen radweise und/oder achsweise und/oder im Drehgestell (3) angeordnet ist.

8. Bremssystem nach wenigstens einem der Ansprüche 4 bis 7, **dadurch gekennzeichnet, daß** die jeweilige lokale Bremssteuereinheit (31) über Daten verfügt, mittels der eine Verknüpfung von Bremssignalen der Vorgabeeinrichtungen mit Signalen der Betriebsgrößen-Erfassungseinrichtung erfolgen kann.

9. Bremssystem nach Anspruch 8, **dadurch gekennzeichnet, daß** mittels den der lokalen Bremssteuereinheit (31) vorliegenden Daten eine Umsetzung der Bremssignale derart erfolgt, daß ein möglichst gleichmäßiger Verschleiß der Bremsen erzielbar ist.

10. Bremssystem nach einem der Ansprüche 4 bis 9, **dadurch gekennzeichnet, daß** die lokalen Bremssteuereinheiten (31), ein Zugsteuergerät, die Vorgabeeinrichtungen (26) in den Führerständen, die Drehgestelle (3) und die lokalen Betriebsgrößen-Erfassungseinrichtungen über eine Sicherheitsschleife (170) miteinander verknüpft sind.

11. Bremssystem nach wenigstens einem der Ansprüche 2 bis 10, **dadurch gekennzeichnet, daß** die lokale Bremssteuereinheit (31) eine lokale Steuerelektronik, eine "Fail-Safe"-Einrichtung (152) und eine Drucksteuerung (161, 162, 164) aufweist.

12. Bremssystem nach Anspruch 11, **dadurch gekennzeichnet, daß** die Drucksteuerung (162) zwei in Reihe geschaltete, elektro-pneumatische Ventile (180, 181) zur Bremsdruckregulierung durch Be- bzw. Entlüften entsprechend eines vorliegenden Bremssignal-Sollwertes und einer vorliegenden Gleitschutz-Information aufweist.

13. Bremssystem nach Anspruch 12, **dadurch gekennzeichnet, daß** die beiden Ventile (180, 181) als Elektromagnetventile mit kleiner Leistung ausgeführt sind.

14. Bremssystem nach einem der Ansprüche 11 bis 13, **dadurch gekennezeichnet, daß** die Drucksteuerung einen stromabwärts der beiden Ventile (180, 181) angeordneten Durchsatzverstärker (164) aufweist.

15. Bremssystem nach wenigstens einem Ansprüche 11 bis 14, **dadurch gekennzeichnet, daß** eine Notbremsung mit Hilfe eines elektrischen Signals ausgelöst wird, wobei das Auslösen der Notbremsung von der "Fail-Safe"-Einrichtung (152) überwacht wird, die bei nicht korrekt eingeleiteter Notbremsung eine Rückfallebene aktiviert.

16. Bremssystem nach Anspruch 15, **dadurch gekennzeichnet, daß** im notbremsfreien Betrieb das vorgenannte elektrische Signal in Form eines Normalbetriebssignals über eine elektrische Sicherheitsleitung (170) weitergeleitet wird.

17. Bremssystem nach Anspruch 15 oder 16, **dadurch gekennzeichnet, daß** im Notbremsfall ein entsprechendes Notbremssignal oder ein Wegfall des Normalbetriebssignals die Notbremsung auslöst.

18. Bremssystem nach wenigstens einem der Ansprüche 15 bis 17, **dadurch gekennzeichnet, daß** im Notbremsfall die Ansteuerung der Betriebsbremsventile bzw. der Betriebsbremsen und/oder die Ansteuerung der Federspeicherbremse über wenigstens ein elektro-pneumatisches Steuerventil (162) erfolgt.

19. Bremssystem nach wenigstens einem der Ansprüche 15 bis 18, **dadurch gekennzeichnet, daß** den Bremsen beim Aktivieren der Rückfallebene ein voreingestellter Bremsdruck zugeführt ist.

20. Bremssystem nach Anspruch 19, **dadurch gekennzeichnet, daß** der voreingestellte Bremsdruck ein fest eingestellter Bremsdruck ist, der während des Betriebs unverändert bleibt.

21. Bremssystem nach Anspruch 19 oder 20, **dadurch gekennzeichnet, daß** der Bremsdruck der Beladung des Fahrzeugs angepaßt ist.

22. Bremssystem nach wenigstens einem der Ansprüche 1 bis 21, **dadurch gekennzeichnet, daß** es eine Hauptluftleitung (43) aufweist, die über ein Zugbremsventil (41) von einer Drucklufterzeugungseinrichtung (22) gespeist wird.

23. Bremssystem nach Anspruch 22, **dadurch gekennzeichnet, daß** die Ansteuerung der Betriebsbremsventile sowie die Aktivierung der Steuereinheit (31c) für die Federspeicherbremse und/oder der weiteren Steuereinheiten (31d, 31e) für die weiteren Hilfsaggregate (36, 37) über lokale, elektronische Bremssteuereinheiten (31, 150) erfolgt, die über einen gemeinsamen Bremsdatenbus (24) miteinander verbunden sind.

24. Bremssystem nach wenigstens einem der Ansprüche 15 bis 18, **dadurch gekennzeichnet, daß** wenigstens eine weitere Steuereinheit (31, 151) als weitere Überwachungseinheit zur Überwachung des Auslösens einer Notbremsung dient.

## Claims

1. Brake system (100) for a railway vehicle (1), comprising a main air reservoir pipe (42) supplied by a compressed-air generator means (22), wherein at least one compressed-air pipe (44) which is connected to each bogie (3), which is connected to said main air reservoir pipe (42) via a check valve (32) and a compressed-air reservoir (33) and which supplies the service brake valves for action upon brakes (34, 35) on said bogie (3) or a controller (31 c) for the spring-loaded brake and/or further controllers (31d, 31e) for further auxiliary units (36, 37), **characterised in that** said compressed-air pipe (44) is moreover connected to said main air reservoir pipe (42) via a stop valve (27) and said check valve (32) and said compressed-air reservoir (33) are disposed in or on said bogie (3), with the frame and/or other structural elements of said bogie (3) being configured, at least in sections, as compressed-air reservoir (33).

2. Brake system according to Claim 1, **characterised in that** said service brake valves and/or said spring-loaded brake and/or further auxiliary units (36, 37) are controlled via at least one local electronic brake control unit (31).

3. Brake system according to at least one of the Claims 1 or 2, **characterised in that** said local brake control unit (31) is located in said bogie (3) or on the coach body in the region of said bogie either per axle and/or per bogie.

4. Brake system according to Claims 2 or 3, **characterised in that** said local brake control unit (31) is supplied, on its input side, with brake signals from determining means (26) operable by the driver and signals from local means for detection of current operating parameters - such as slippage, axle load, wheel speed, actual deceleration and bogie load - and/or signals from means for monitoring and for the automatic mode of operation (ATO, ATC, ATP).

5. Brake system according to Claim 4, **characterised in that** the brake signals of said determining means are passed via a central rail vehicle data bus (23) to at least one gateway configured as suitable interface, from where these signals or corresponding brake signals, respectively, are passed on via a central brake data bus to said local brake control units (31).

6. Brake system according to Claim 4, **characterised in that** the brake signals are passed directly from a central rail vehicle data bus (23) to said local brake control units (31).

7. Brake system according to at least one of the Claims 4 to 6, **characterised in that** said local means for detecting current operating parameters is disposed per wheel and/or per axle and/or in said bogie (3).

8. Brake system according to at least one of the Claims 4 to 7, **characterised in that** the respective local brake control unit (31) is provided with data by means of which brake signals from said determining means may be combined with signals from said means detecting operating parameters.

9. Brake system according to Claim 8, **characterised in that** by means of the data available in said local brake control unit (31), conversion of the brake signals is realised in such a way that a most homogeneous wear possible is achievable on the brakes.

10. Brake system according to any of the Claims 4 to 9, **characterised in that** said local brake control units (31), a train control unit, said determining means (26) in the drivers' compartments, said bogies (3) and said local means for detecting operating parameters are interlinked via a safety loop (170).

11. Brake system according to at least one of the Claims 2 to 10, **characterised in that** said local brake control unit (31) comprises a local electronic control system, a "fail safe" means (152) and a pressure controller (161, 162, 164).

12. Brake system according to Claim 11, **characterised in that** said pressure controller (162) comprises two series-connected electro-pneumatic valves (180, 181) for adjustment of the braking pressure by ventilation or bleeding in correspondence with a brake signal set value available and an antiskid information available.

13. Brake system according to Claim 12, **characterised in that** said two valves (180, 181) are designed as low-power electromagnetic valves.

14. Brake system according to any of the Claims 11 to 13, **characterised in that** said pressure controller comprises a flow-rate intensifier (164) disposed downstream of said two valves (180, 181).

15. Brake system according to at least one of the Claims 11 to 14, **characterised in that** an emergency brake application cycle is triggered by means of an electric signal, with the initiation of the emergency brake application cycle being monitored by said "fail safe" means (152) that activates a drop-out level when the emergency brake application cycle is not correctly initiated.

16. Brake system according to Claim 15, **characterised in that** in operation without emergency brake application, said electrical signal is passed on in the form of a regular operation signal via an electric safety line (170).

17. Brake system according to Claim 15 or 16, **characterised in that** in the event of emergency brake application, an appropriate emergency brake application signal or a missing regular operation signal triggers the emergency brake application cycle.

18. Brake system according to at least one of the Claims 15 to 17, **characterised in that** in the event of emergency brake application, said service brake valves or said service brakes, respectively, and/or said spring-loaded brake are controlled via at least one electro-pneumatic control valve (162).

19. Brake system according to at least one of the Claims 15 to 18, **characterised in that** when said drop-out level is activated, a preset brake pressure is supplied to the brakes.

20. Brake system according to Claim 19, **characterised in that** said preset brake pressure is an invariably set brake pressure that remains unvaried throughout the operation.

21. Brake system according to Claim 19 or 20, **characterised in that** the brake pressure is matched with the vehicle load.

22. Brake system according to at least one of the Claims 1 to 21, **characterised in that** it comprises at least one main brake pipe (43) that is supplied via a train brake valve (41) from a compressed-air generator means (22).

23. Brake system according to Claim 22, **characterised in that** the control of said service brake valves as well as the activation of said control unit (31) for said spring-loaded brake and/or said further control units (31 d, 31 e) for said further auxiliary units (36, 37) is implemented via local electronic brake control units (31, 150) that are connected to each other via a common brake data bus (24).

24. Brake system according to at least one of the Claims 15 to 18, **characterised in that** at least one further control unit (31, 151) serves as additional monitoring unit for monitoring an emergency brake application cycle for triggering.

## Revendications

1. Système de freinage (100) pour un véhicule sur rails (1), comprenant un conduit principal du réservoir d'air (42) alimenté par un moyen générateur d'air comprimé (22), dans lequel au moins un conduit d'air comprimé (44), qui est raccordé à chaque bogie (3), qui est relié audit conduit principal du réservoir d'air (42) via un clapet de non-retour (32) et un réservoir d'air comprimé (33) et qui alimente les clapets de frein de service pour une action sur des freins (34, 35) audit bogie (3) ou une unité de commande (31 c) pour le frein de serrage et/ou des autres unités de commande (31 d, 31 e) pour des autres unités auxiliaires (36, 37), **caractérisé en ce que** ledit conduit d'air comprimé (44) est au plus relié audit conduit principal du réservoir d'air (42) via une soupape d'arrêt (27) et ledit clapet de non-retour (32) ainsi que ledit réservoir d'air comprimé (33) sont disposés dans ledit ou audit bogie (3), au cadre et/ou des autres éléments structurels dudit bogie (3) étant configurés, au moins par parties, en tant qu'un réservoir d'air comprimé (33).

2. Système de freinage selon la revendication 1, **caractérisé en ce que** lesdits clapets de frein de service et/ou ledit frein de serrage et/ou des autres unités auxiliaires (36, 37) sont commandés via au moins une unité électronique de commande de frein locale (31).

3. Système de freinage selon au moins une des revendications 1 ou 2, **caractérisé en ce que** ladite unité de commande de frein locale (31) se trouve dans ledit bogie (3) ou à la caisse dans la zone dudit bogie, soit par essieu et/ou par bogie.

4. Système de freinage selon la revendications 2 ou 3, **caractérisé en ce que** ladite unité de commande de frein locale (31) est alimenté, de son côté d'entrée, en signaux de freinage provenant d'un moyen de demande (26) opérable par le conducteur et en signaux provenant des moyens locaux à détecter des paramètres d'exploitation courants - comme le patinage, la charge par essieu, la vitesse des roues, le retard courant et la charge sur le bogie - et/ou en signaux provenant des moyens de monitorage et pour le mode d'exploitation automatique (ATO, ATC, ATP).

5. Système de freinage selon la revendication 4, **caractérisé en ce que** les signaux de freinage dudit moyen de demande sont passés via un bus de données central du véhicule sur rails (23) à au moins une passerelle configurée en tant que l'interface appropriée, à partir de laquelle ces signaux ou respectivement des signaux de freinage correspondants sont transférés via un bus de données central de signaux de freinage vers lesdites unités de commande des freins locaux (31).

6. Système de freinage selon la revendication 4, **caractérisé en ce que** les signaux de freinage sont transférés directement à partir d'un bus de données central du véhicule sur rails (23) vers lesdites unités de commande des freins locaux (31).

7. Système de freinage selon au moins une des revendications 4 à 6, **caractérisé en ce que** ledit moyen local à détecter des paramètres d'exploitation courants est disposé roue et/ou par essieu et/ou dans ledit bogie (3).

8. Système de freinage selon au moins une des revendications 4 à 7, **caractérisé en ce que** l'unité respective de commande de frein locale (31) est alimentée en données utilisées afin de combiner des signaux de freinage provenant du moyen de demande avec des signaux provenant dudit moyen détecteur des paramètres d'exploitation.

9. Système de freinage selon la revendication 8, **caractérisé en ce que** la conversion des signaux de freinage se fait par emploi des données présentes dans ladite unité de commande de frein locale (31) d'une telle manière, qu'une usure la plus homogène possible soit achevable aux freins.

10. Système de freinage selon une quelconque des revendications 4 à 9, **caractérisé en ce que** lesdites unités de commande des freins locaux (31), une unité de pilotage du train, ledit moyen de demande (26) dans les cabines de conduite, lesdits bogies (3) et ledit moyen local à détecter des paramètres d'exploitation sont enchaînés via une boucle de sécurité (170).

11. Système de freinage selon au moins une des revendications 2 à 10, **caractérisé en ce que** ladite unité de commande de frein locale (31) comprend un système électronique local de commande, un moyen de sécurité positive (152) et une unité de commande de la pression (161, 162, 164).

12. Système de freinage selon la revendication 11, **caractérisé en ce que** ladite unité de commande de la pression (162) comprend deux soupapes électromagnétiques couplées en série (180, 181) pour l'ajustement de la pression de freinage par ventilation ou purge en correspondance avec la valeur de consigne de freinage présente et d'une information d'anti-enrayage présente.

13. Système de freinage selon la revendication 12, **caractérisé en ce que** lesdites deux soupapes (180, 181) sont conçues en tant que soupapes électromagnétiques à faible puissance.

14. Système de freinage selon une quelconque des revendications 11 à 13, **caractérisé en ce que** ladite unité de commande de la pression comprend un amplificateur de débit (164) disposé en aval desdites deux soupapes (180, 181).

15. Système de freinage selon au moins une des revendications 11 à 14, **caractérisé en ce qu'**un cycle de freinage d'urgence est déclenché moyennant un signal électrique, à monitorage de l'initiation du cycle de freinage d'urgence par ledit moyen de sécurité positive (152), qui active un niveau de défaillance, quand le cycle de freinage d'urgence n'est pas correctement initié.

16. Système de freinage selon la revendication 15, **caractérisé en ce que** en exploitation sans freinage d'urgence, ledit signal électrique est transféré sou forme d'un signal de fonctionnement régulier via une ligne électrique de sécurité (170).

17. Système de freinage selon la revendication 15 ou 16, **caractérisé en ce qu'**au cas de freinage d'urgence, un signal approprié de freinage d'urgence ou un signal d'absence de fonctionnement régulier déclenche le cycle de freinage d'urgence.

18. Système de freinage selon au moins une des revendications 15 à 17, **caractérisé en ce qu'**au cas de freinage d'urgence, lesdits clapets de frein de service ou respectivement lesdits freins de service, et/ou ledit frein de serrage sont commandés via au moins une soupape électropneumatique de commande (162).

19. Système de freinage selon au moins une des revendications 15 à 18, **caractérisé en ce que**, quand ledit niveau de défaillance est activé, une pression de freinage préréglée est alimentée aux freins.

20. Système de freinage selon la revendication 19, **caractérisé en ce que** ladite pression de freinage préréglée est une pression de freinage réglé fixe, qui reste inchangée au cours de l'exploitation.

21. Système de freinage selon la revendication 19 ou 20, **caractérisé en ce que** ladite pression de freinage est adaptée à la charge du véhicule.

22. Système de freinage selon au moins une des revendications 1 à 21, **caractérisé en ce qu'**il comprend au moins une conduite générale de frein (43), qui est alimentée via un clapet de freinage du train (41) à partir d'un moyen générateur d'air comprimé (22).

23. Système de freinage selon la revendication 22, **caractérisé en ce que** la commande desdits clapets de frein de service ainsi que l'activation de ladite unité de commande (31) pour ledit frein de serrage et/ou lesdites autres unités de commande (31 d, 31e) pour lesdites autres unités auxiliaires (36, 37) se fait via des unités électroniques locales de commande de freinage (31, 150), qui sont reliées l'une à l'autre via un bus de données de freinage commun (24).

24. Système de freinage selon au moins une des revendications 15 à 18, **caractérisé en ce qu'**au moins une autre unité de commande (31, 151) sert en tant qu'une unité de monitorage supplémentaire à surveiller un cycle de freinage d'urgence en vue de son déclenchement.
